Europäisches Patentamt

European Patent Office

Office européen des brevets

(19)

(11) **EP 1 267 280 A2**

(12) **EUROPEAN PATENT APPLICATION**

(43) Date of publication:
**18.12.2002 Bulletin 2002/51**

(51) Int Cl.$^7$: **G06F 17/30**

(21) Application number: **02019632.5**

(22) Date of filing: **29.03.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **31.05.2000 US 207969 P
19.09.2000 KR 2000054868**

(62) Document number(s) of the earlier application(s) in
accordance with Art. 76 EPC:
**01302934.3 / 1 162 553**

(72) Inventors:
• **Shin, Hyun-doo
Pundang-gu, Seongnam-city, Kyungki-do (KR)**
• **Choi, Yang-lim
Bundang-du, Seongnam-si-, Gyeonggi-do (KR)**
• **Sumengen, Baris, University of California
Santa Barbara, CA 93106-9560 (US)**
• **Manjunath, Bangalore S.,
University of California
Santa Barbara, CA 93106-9560 (US)**

(74) Representative: **Geary, Stuart Lloyd et al
Venner, Shipley & Co.,
20 Little Britain
London EC1A 7DH (GB)**

(71) Applicants:
• **SAMSUNG ELECTRONICS CO., LTD.
Suwon-City, Kyungki-do (KR)**
• **The Regents of The University of California
Oakland, CA 94607-5200 (US)**

Remarks:
This application was filed on 03 - 09 - 2002 as a
divisional application to the application mentioned
under INID code 62.

(54) **Method and apparatus for populating, indexing and searching a non-html web content database**

(57) The present invention relates to a method and apparatus for populating, indexing and searching a non-html web content database.

Current web search engines are primarily concerned with indexing web pages according to their text content. Means for effectively indexing and searching for multimedia content on the www are missing.

Non-html web content is located by spidering the results of a web search query or category selection. The located content items are indexed with a keyword used in the query or the category. The keyword can then be used to retrieve the items directly.

FIG. 1

EP 1 267 280 A2

**Description**

The present invention relates to a method of generating an index of non-html web content and to a method of searching for non-html web content.

Much multimedia content is available on the World Wide Web (WWW). However, web search engines are presently primarily concerned with indexing web pages according to their text content. As the amount of multimedia data increases, the need for a means of effectively searching for multimedia content on the World Wide Web become more pressing.

A method of generating an index of non-html web content according to the present invention comprises:-

sending an http request to a remote web search engine site;

conducting a spidering web search for non-html web content starting at the page served in response to said request; and

generating an entry in a database storage device associating an non-html content item located in said search with an index term semantically related to an element of said request or the requested page.

The request may comprise a request for a page comprising links to web sites pre-categorized in a common category and said index term relates to said category. In this case, the remote web search engine site preferably comprises a plurality of pages linked into a tree structure, in which child nodes relate to sub-categories of their parent nodes and said requested page is a leaf node of said tree structure.

Alternatively, the request may comprise the URL of a web search process and a search parameter, e.g. sent by either the http GET method or the http POST method, and said index term relates to said search parameter.

Preferably, said spidering search is conducted for images and images having less than a predetermined number of pixels are ignored. More preferably, said predetermined number is 128.

Preferably, an indexing method according to the present invention includes generating a further index term for each located item on the basis of an internal characteristic, .e.g. colour or texture in the case of images, of said item.

Each located item, or a modified version thereof, may be added to a database. However, the URLs of located items could be added to a database instead.

A method of searching for non-html web content according to the present invention comprises:-:

searching a database containing a plurality of entries generated by a method according to the present invention for an index term that matches an input keyword;

retrieving a search result data set comprising at least one non-html content item in dependence on an index term/keyword match; and

making at least one of said items perceivable to a user.

Preferably, user inputs identifying at least one item made perceivable are received, a query vector is generated from the or each identified item and a feature vector search is conducted through said search result data set using said query vector.

Embodiments of the present invention will now be described, by way of example, with reference to the accompanying drawings, in which: -

Figure 1 is a block diagram showing the structure of a database building apparatus for multimedia content according to the present invention;

Figure 2 is a flowchart showing the major steps of a first database building method for multimedia content according to the present invention;

Figure 3 is a flowchart showing the major steps of a second database building method for multimedia content according to the present invention;

Figure 4 is a block diagram showing the structure of a multimedia content search apparatus according to the present invention; and

Figure 5 is a flowchart showing the major steps of a multimedia content search method according to the present invention.

According to the present invention, multimedia contents are semantically classified so that retrieval or browsing can be efficiently done. For example, multimedia contents corresponding to "F-16 fighter" can be classified in a category labelled "Gulf War". For this, the hierarchical category structure in a web search engine site is used. For example, web search engine sites such as Yahoo ™ have a hierarchical category structure. For example, a clicking on a link having the text "movie" requests a page listing links to sub-categories such as "erotic", "action", or "film noir".

The leaf nodes of such a structure comprise links to other sites dealing with particular sub-categories.

Therefore, the present invention uses these category structures in making a database for multimedia content.

For the present embodiment, image data is taken as an example of multimedia content to be indexed.

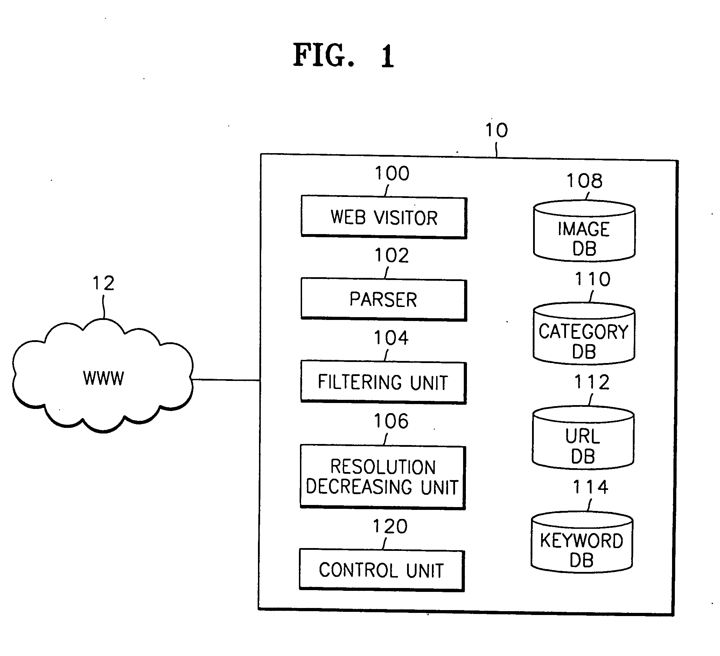

Referring to Figure 1, the database building apparatus 10 for multimedia content according to the present invention is connected to the World Wide Web (WWW) 12, and has a web visitor 100, a parser 102, a filtering unit 104, a resolution decreasing unit 106, an image database 108, a category database 110, a keyword database 112, a universal resource locator (URL) database 114 and a control unit 120.

The operation of the database building apparatus for multimedia content will now be explained. First, a user selects and visits a web search engine site (step 202), and clicks on a link to a category page, for the field in which the user is interested, on the visited site's home page. The content classification of the visited web search engine site has a categorized structure. Responding to the click by the user, the web visitor 100 loads a hypertext markup language (HTML) web page data identified by the link (step 206). Next, the parser 102 parses the page for links to sub-categories or multimedia content. In the present example, links to image files are identified by filenames with conventional image file extensions, for example *.jpg, *.gif, *.png and *.bmp (step 208). Next, it is determined whether the parsed text includes a sub-category link (step 210). If it is determined that the parsed text includes a sub-category link, the sub-category link is followed (step 212) and step 206 is repeated for the new page.

However, if links to one or more images are found, the linked images are requested (step 214). By doing so, the web visitor 100 hierarchically visits web pages in the web search engine site and requests linked images. These operations are automatically executed and may be performed using a web robot. That is, it can be said that the web robot sites related to the selected URL, by spidering the selected URL and its offspring URLs.

It is preferable that the parser 102 parses associated text for keywords as well as the image filenames themselves in step 206. Since keywords are nouns in general, it is possible to extracts them using already known methods.

Graphics and the like for decorating web sites are regarded as a noise and excluded during indexing. In the present embodiment, the filtering unit 104 determines whether a linked image has 128 pixels or more (step 216). If an image has less than 128 pixels, it is determined to be a thumbnail and excluded from the indexing process (step 218). If an image has 128 pixels or more, the image is determined not to be a thumbnail and the resolution decreasing unit 106 decreases the resolution of the image (step 220).

The reduced resolution image is stored in the image database 108, and the identification information for the image stored in the image database 108 and the category information for the visited web page are stored in the category database 110 in step 222.

Alternatively, the original data, i.e. without resolution reduction, can be stored in the database, or the URL of the image can be stored in the database so that the corresponding site can be linked to. Also, preferably, in order for keywords to be linked to respective images, keywords corresponding to respective images can be stored together with the information on respective images, stored in the image database, in the keyword database 112.

The control unit 120 determines whether or not the number of indexed images is equal to or greater than 1000 (step 224). When the number of indexed images is less than 1000, a control signal of a "low" level is output, and when the number is equal to or grater than 1,000, a control signal of a "high" level is output. Responding to the "high" level control signal, the parser 102 performs step 208, and responding to the "low" level control signal, it finishes parsing. That is, when the number of indexed images is equal to or greater than 1000, the visit of a site is finished.

In the above-described database building method, multimedia content in the hierarchically visited categories, for example reduced resolution images, e.g. thumbnails, or original images, are semantically classified and stored in the database and indexed using category information from the corresponding sites.

Web search engine sites such as Google ™ and Altavista ™ provide retrievals based on URLs rather than category information. For example, when a search word "soccer" is input, the addresses of sites related to "soccer" are provided as the search results. Even when these web search engine sites are used, sites having semantically close relations with the corresponding search word are provided.

In the database building method for multimedia contents according to another embodiment of the present invention, a structure that enables a semantic search of these web search engine sites is used for building a database for multimedia contents.

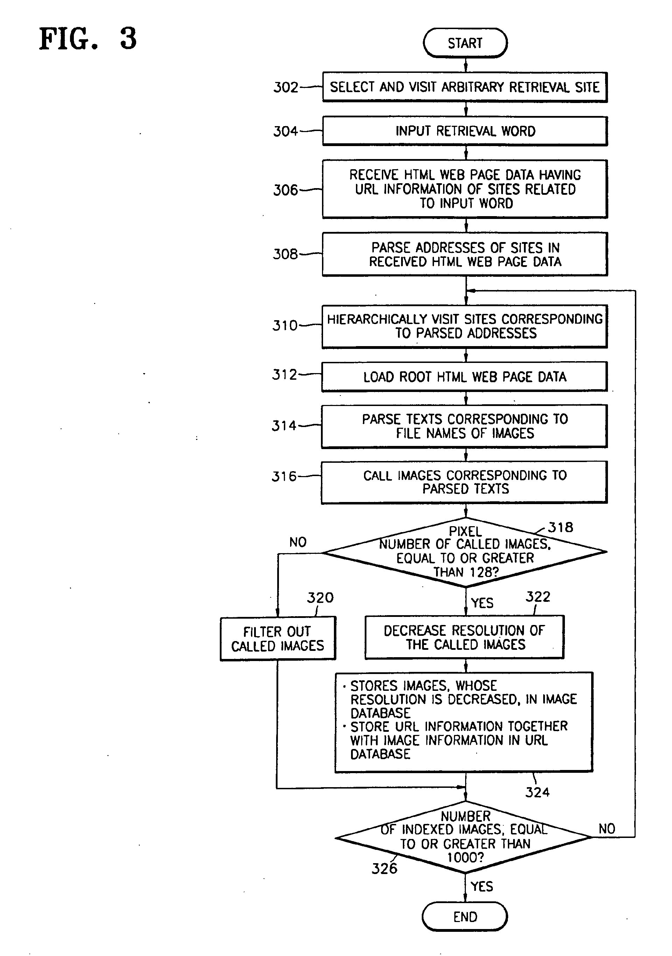

Referring to Figure 3, in the database building method for multimedia contents according to another embodiment of the present invention, first, the web visitor 100 visits an arbitrary web search engine sites after selecting the site (step 302). Next, the user inputs a search word corresponding to the field of database which is wanted to be built (step 304). The search word corresponds to the identifier of the multimedia contents to be included in the database. Next, the web visitor 100 receives the addresses of sites related to the input search word, for example, HTML web page data having URL information (step 306).

Next, the parser 102 parses the addresses of the sites in the received HTML web page data (step 308). The web visitor 100 hierarchically visits sites corresponding to parsed addresses (step 310). Then, the web visitor 100 loads root HTML web page data from the visiting web search engine site (step 312). The parser 102 parses multimedia contents in the loaded HTML web page data, for example in the present embodiment, the filenames of images, such as filenames having *.jpg, *.gif, *.png and *.bmp extensions (step 314). Alternatively, an IMG tag ALT attribute value can be used. Since these ALT attributes are often manually input by a web site author, the characteristics of images, and more generally, the characteristics of multimedia contents are relatively well expressed.

Preferably, the parser 102 also parses for keywords representing the characteristics of parsed linked images in step 314. Because keywords are generally nouns, it is possible to extract them in an already known method.

Next, the web visitor 100 requests image data identified by the parsed links in step 316. Graphics for decorating web sites are regarded as a noise and are not indexed. Therefore, the filtering unit 104 filters the requested images to filter out noise images. In the present embodiment, the filtering unit 104 determines whether requested images contain 128 or more pixels (step 318). If a requested image has less than 128, it is determined to be a thumbnail and excluded from the indexing process (step 320). If a requested image has 128 pixels or more, the resolution decreasing unit 106 determines that requested image is not a thumbnail and decreases its resolution (step 322). The reduced resolution image is stored in the image database 108, and information on respective images stored in the image database 108 together with URL information for the visited web page data are stored in the URL database (step 324).

Alternatively, the original image data may be stored in the image database 108 or the URL of the image may stored instead of storing actual images. Preferably, keywords relating to stored images together with information on images stored in the image database 108 are stored in the keyword database 112.

The control unit 120 determines whether or not the number of indexed images is equal to or greater than a predetermined number in step 326. When the number of indexed images is less than 1000, the web visitor 100 loads root HTML web page data from the visited web search engine site according to the step 310.

When the number of indexed images is equal to or greater than 1000, the visit to the site is finished.

In order for efficient searching of images, the characteristics of textures and/or colors can be extracted and stored in a separate characteristic database (not shown in drawings). These characteristics can be extracted by Gabor filters which have scale and directional coefficients. For example, when a characteristic vector of an input image is calculated by a filter formed by a combination of Gabor filters having 3 kinds of scale coefficients and 4 kinds of directional coefficients, and if average and distribution are used for components of the characteristic vector, the characteristic vector can be expressed as following equation 1:

$$f_{texture} = [t_1, t_2, t_3, ..., t_{24}] \qquad (1)$$

Using the characteristic vectors, images are indexed. In the characteristic database, the characteristic vectors and image information corresponding to the characteristic vectors are stored.

Similarly, it is possible to extract color characteristics and store them in a separate characteristic database. Characteristic vectors showing color primitives can be extracted from a color distribution histogram calculated in a CIE LUV color space. For example, if each dimension of 3 dimensional color space is quantized in four levels, it can be expressed as a 64-dimensional color characteristic vectors as following equation 2:

$$f_{colour} = [c_1, c_2, c_3, ..., c_{24}] \qquad (2)$$

The characteristic vectors and image information corresponding to the characteristic vectors are stored in the characteristic database.

In another the database building method for multimedia content according to the present invention, thumbnail images of which image resolution are decreased, or original images, both of which are requested from sites listed in visited categories, are stored in the corresponding database, after classified semantically using URL information of the corresponding sites. The characteristics of textures and/or colors of called images are stored in a separate database.

In the database building method for multimedia according to the present invention, multimedia contents on the WWW are semantically classified and indexed.

Such database building method for multimedia contents can be applied to multimedia content such as TV news broadcastings, or to shopping items using online multimedia expression.

Though building a database of images is exemplified in the above embodiments, the present invention can be applied to various multimedia content types such as audio clips, and moving video clips with audio.

In the database built by the database building method for multimedia contents according to the present invention described above, multimedia contents dispersed on the WWW are well collected, and the multimedia contents are semantically well classified, using category information or URL information. Therefore, various retrieval method for multimedia can be used to efficiently retrieve wanted multimedia contents.

Particularly, when the method for retrieving multimedia contents according to the present invention, data which is similar to query data of multimedia data can be efficiently retrieved.

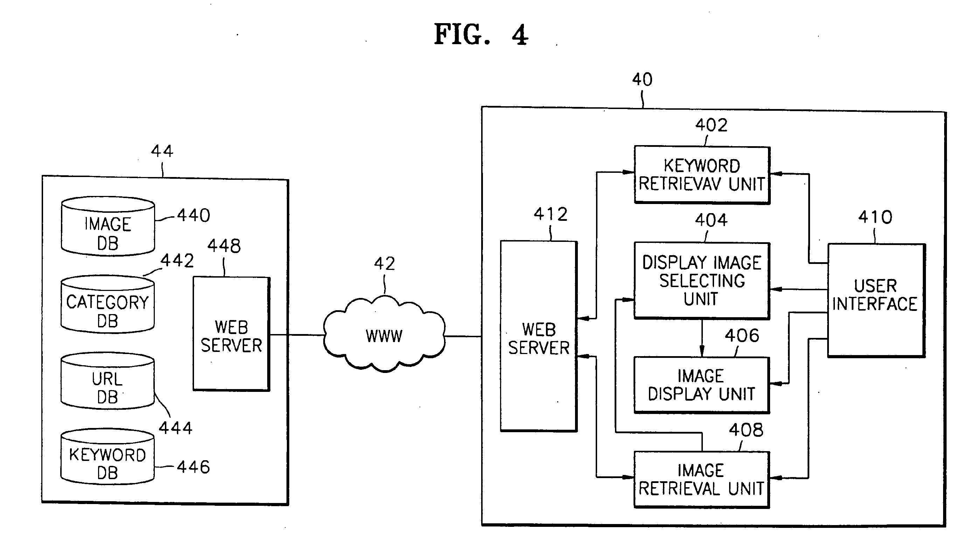

Referring to Figure 4, the multimedia contents retrieval apparatus according to the present invention is linked to a server 44 for providing an image search service through the WWW 42.

The multimedia contents retrieval apparatus has a keyword retrieval unit 402, a display image selecting unit 404, an image display unit 406, an image retrieval unit 408, a user interface 410, and a web server 412 for communicating via the Internet 42.

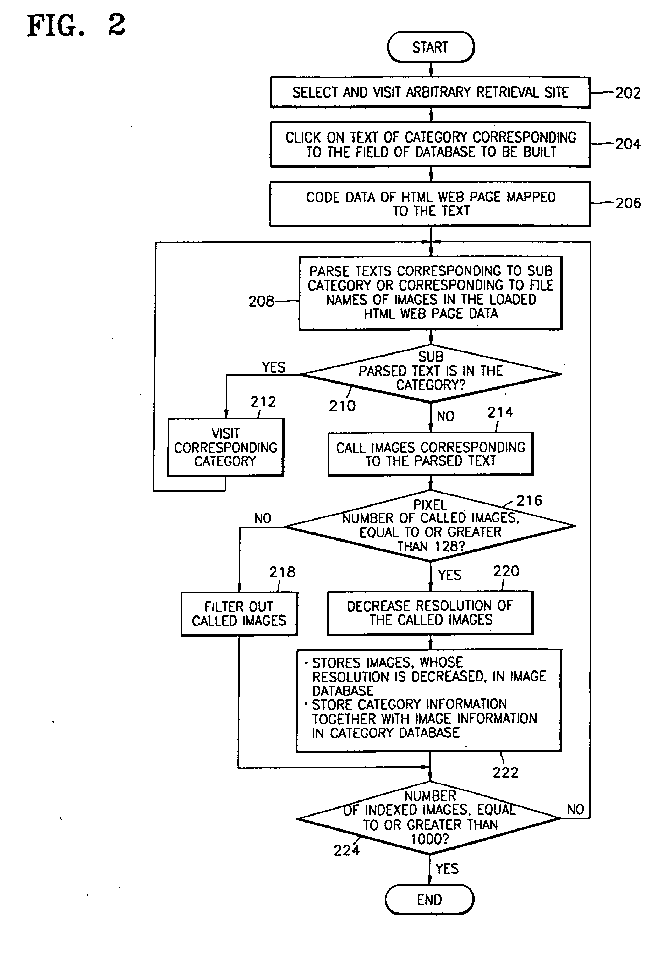

The server 44 has databases built by the database building method for multimedia contents explained with reference to Figures 2 and 3, that is, an image database 440, a category database 442, a URL database 444 and a keyword database 446. Also, the server 44 has a web server 448 for communicating via the Internet 42.

In the present embodiment, an image is taken as an example of the multimedia content and it is assumed that databases are built using the database building method for multimedia contents according to the embodiment of the present invention explained with reference to Figure 2.

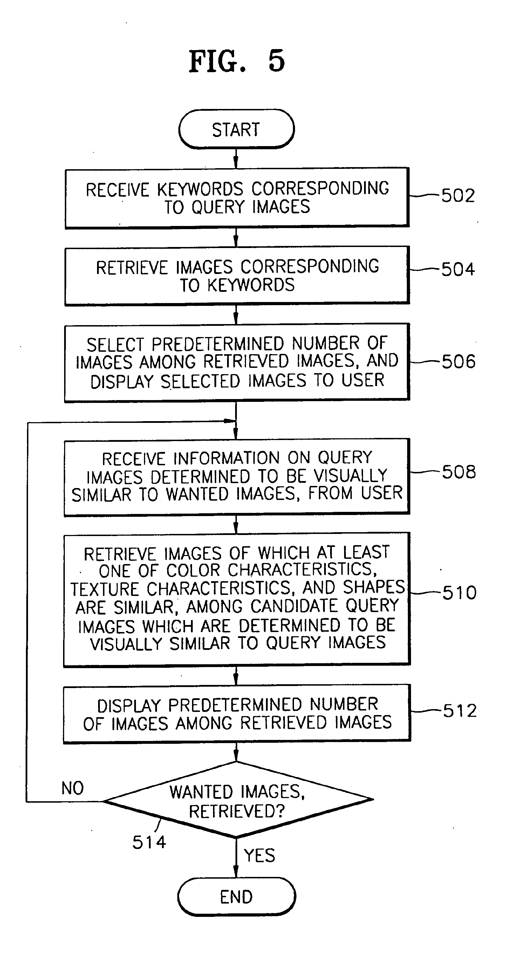

Referring to Figure 5, first, a keyword corresponding to a query image, which is wanted by a user, from the user is received in step 502. First, when a user wants to retrieve "shoe", which has a certain shape, with a query image, the user operates a recording medium, which stores program codes performing the multimedia content retrieval method according to the present invention, in a computer, and inputs the keyword "shoe" to a retrieval keyword space on the operating screen displayed on the monitor of the user.

Next, the keyword retrieval unit 402 retrieves words, which are identical to the input keyword, in the keyword database 446 of the server 44 through the web server 412. When the identical word is retrieved, the image linked to the retrieved word is called in from the image database 440. By doing so, images corresponding to the input keyword are retrieved in step 504.

Since there are a lot of images in the database, and the retrieved images obtained by using only a keyword in a voluminous database could include those images which are not visually similar to the wanted image, it is almost impossible to retrieve the wanted image with one search using only a keyword. Therefore, it is preferable that the user checks with the naked eye some images among the retrieved images and selects similar images and feeds the selected images back to the image retrieval unit 408 so that retrieval can be executed again.

For this, the display image selecting unit 404 selects a predetermined number of images from the images retrieved in step 504 and the image display unit 406 displays the predetermined number of selected images for the user in step 506.

Viewing the displayed images with the naked eye, the user selects one or more images, which are similar to the image the user wants to find, and determines those images to be query images and provides information on them. In the present embodiment, responding to user's input, the user interface 410 selects a plurality of shoe shape containing images and provides selecting information. By doing so, the image retrieval unit 408 receives information on candidate query images, which are determined to be visually similar to the wanted image, from the user in step 508.

Next, the image retrieval unit 408 retrieves images, which are similar in at least one characteristic among the colour, texture and shape, among candidate query images that are determined to be visually similar to the query image, in the image database in step 510.

In order to determine whether or not two images, that is, the query image and the retrieved image, are visually similar, similarity can be obtained by calculated difference of characteristic vectors of the two images. In the present embodiment, it is assumed that the characteristic vectors of images are stored in a characteristic database (not shown in drawings). When $k$ is the length of the texture vector, the difference between characteristics of textures of two images $i$ and $j$ can be obtained by the following equation 3:

$$d_{texture}(i,j) = \sum_{k=1}^{24} \left| t_k^{(i)} - t_k^{(j)} \right| \qquad (3)$$

Also, when $k$ is the length of the colour vector, the difference between characteristics of colours of two images $i$ and $j$ can be obtained by calculating the Euclidean distance of the two characteristic vectors, using the following equation 4:

$$d_{colour}(i,j) = \left( \sum_{k=1}^{64} \left( c_k^{(i)} - c_k^j \right)^2 \right)^{\frac{1}{2}} \qquad (4)$$

It is determined that an image, which has the characteristic vector with the least difference to the characteristic vector of the given query image, is the retrieved image.

When an image to be retrieved is an original image, the retrieved image is provided to the user as it is. When an image to be retrieved is a thumbnail image, the URL associated with the retrieved image, that is, the URL corresponding to the original image of the thumbnail image is used to call the original image after the site having the corresponding URL is connected through the Internet, and then the original image is provided for the user. At this time, the URL information can be stored together with the thumbnail image in the image database 422.

In retrieving based on contents, the user selects a set R of relevant query images. The relative weighted values of the colour and texture characteristics are determined depending on how tightly such sets of images are collected in a colour space. That is, when |R| is the number of images in the query set, the weighted values are obtained by the following equations 5 and 6:

$$\overline{d}_{texture} = \frac{1}{|R|} \sum_{i,j \in R} d_{texture}(i,j) \qquad (5)$$

$$\overline{d}_{colour} = \frac{1}{|R|} \sum_{i,j \in R} d_{colour}(i,j) \qquad (6)$$

Next, $\varepsilon$ is a predetermined small value for preventing any one characteristic from being extremely prominent and weighted values can be obtained through the following equations 7 and 8:

$$w_{texture} = \frac{1}{d_{texture} + \varepsilon} \qquad (7)$$

$$w_{colour} = \frac{1}{d_{colour} + \varepsilon} \qquad (8)$$

When N is a predetermined positive number, N nearest neighbours can be obtained by calculating the following equation 9:

$$d(\bullet,\bullet) = W_{texture} d_{texture}(\bullet,\bullet) + w_{colour} d_{colour}(\bullet,\bullet) \qquad (9)$$

Generally, a query is specified by a single pair of a texture characteristic vector and a colour characteristic vector. Therefore, in the present embodiment, when a plurality of query images are selected, the average of the texture characteristic vector and the colour characteristic vector is used. That is, the values are obtained by the following equations 10 and 11:

$$\bar{f}_{texture} = \frac{1}{|R_q|} \sum_{i \in R} f_{texture}^{(i)} \qquad (10)$$

$$\bar{f}_{colour} = \frac{1}{|R_q|} \sum_{i \in R} f_{colour}^{(i)} \qquad (11)$$

Retrieval based on contents can be generalized as follows. In a single query image using characteristic vectors $f_{texture}$ and $f_{colour}$, first, when $i$ is 1,...,$N/2$ and $i \leq j$, it is assumed that following conditions 12 and 13 are satisfied:

$$d_{texture}(f_{texture}, s_{texture}^{(i)}) \leq d_{texture}(f_{texture} s_{texture}^{(j)}) \qquad (12)$$

(Here, $x \notin s_{texture}$)

$$d_{texture}(f_{texture}, s_{texture}^{(N/2)}) \leq d_{texture}(f_{texture} s_{texture}^{(j)}) \qquad (13)$$

Then, the following equation 14 can be used:

$$s_{texture} = \{s^{(i)}\} \qquad (14)$$

Second, when $i$ is 1,...,$N/2$ and $i \leq j$, it is assumed that following conditions 15 and 16 are satisfied:

$$d_{colour}(f_{colour}, s_{colour}^{(i)}) \leq d_{colour}(f_{colour} s_{colour}^{(j)}) \qquad (15)$$

(Here, $x \notin s_{color}$)

$$d_{colour}(f_{colour}, s_{colour}^{(N/2)}) \leq d_{colour}(f_{colour} s_{colour}^{(j)})$$

Then, the following equation 15 can be used:

$$s_{colour} = \{s^{(i)}\} \qquad (17)$$

Also, in a plurality of query images having $\bar{f}_{texture}$ and $\bar{f}_{colour}$, when $i$ is 1,...,N and $i \leq j$, it is assumed that following conditions 18 and 19 are satisfied:

$$d((\bar{f}_{texture}, \bar{f}_{colou}), (s_{texture}^{(i)}, s_{colour}^{(i)})) \leq d((\bar{f}_{texture}, \bar{f}_{colou}), (s_{texture}^{(j)}, s_{colour}^{(j)})) \qquad (18)$$

(Here, $x \notin S_{texture}$)

$$d((\bar{f}_{texture}, \bar{f}_{colou}), (\bar{s}_{texture}^{(N)}, \bar{s}_{colour}^{(N)})) \leq d((\bar{f}_{texture}, \bar{f}_{colou}), x_{texture}, x_{colour})) \qquad (19)$$

Then, the following equation 18 can be used:

$$s = \{s^{(i)}\} \qquad (20)$$

Next, the display image selecting unit 404 again selects predetermined number images among the retrieved images of which at least one of color characteristics, texture characteristics, and shapes are similar, and the image display unit 406 displays the predetermined number of selected images to the user in step 512. Here, it is preferable that the scope of retrieval is limited within the category of the query image and the neighboring categories.

When the database is built according to the database building method for multimedia contents according to the second embodiment of the present invention explained referring to Figure 4, it is preferable that the scope of retrieval is limited with in the query image URL and neighboring URLs. The retrieved image can be the original image or the thumbnail image which is obtained by decreasing the resolution of the original image. When the object image of retrieval is the original image, retrieval can be done more accurately, but, depending on the amount of data and the system performance, retrieval time can be extended. When the object image of retrieval is the thumbnail image, accuracy is lower but retrieval time can be shortened. Therefore, according to a purpose, database can be managed appropriately.

Responding to the user's input, the user interface 410 selects one or more images which are determined to be similar to the image wanted by the user when the user views the displayed images with the naked eye, and provides information on the images which are determined to be visually similar to the query image. By doing so, the image retrieval unit 408 again receives information on the images which are determined to be visually similar to the query image, from the user. The images which are received again are regarded as candidate query images. Next, the image retrieval unit 408 again retrieves those images, of which at least one among colour characteristics, texture characteristics and shape, are determined to be visually similar to the query image, in the image database 422. That is, it is determined whether or not the wanted image has been retrieved in step 514, and when the wanted image has not been retrieved, steps 508 through 512 are repeatedly performed. Here, it is preferable that the scope of retrieval is limited within the category of the query image and neighbouring categories.

The multimedia content retrieval method enables fast retrieval of wanted images in a database storing multimedia content.

The database building method for multimedia content and the retrieval method can be written as a program operating in a personal computer or a server-class computer. The program codes and code segments forming the program can be easily written by workers in the field from the foregoing description. The program can be stored in a computer readable recording medium. The recording medium includes a magnetic recording medium and an optical recording medium. The program codes may also be transmitted by electric and electromagnetic signals.

As described above, using category information on the corresponding sites, the database building method for multimedia contents according to the present invention semantically classifies multimedia contents and stores them in the corresponding databases. In the database built by the database building method for multimedia contents according to the present invention, multimedia contents which are dispersed on the WWW are well collected and, using category information or URL information, are semantically well classified. Therefore, various method for retrieving multimedia contents can be used so that wanted multimedia contents can be retrieved fast and efficiently.

**Claims**

1.  A database building method for multimedia contents, the method comprising the steps of:

    (a) accessing an arbitrary site providing multimedia contents through a telecommunications network;
    (b) calling multimedia contents in by spidering the site; and
    (c) classifying the multimedia contents data according to the stored addresses and storing them in a predetermined database.

2.  The database building method of claim 1, wherein the multimedia contents data is image data.

3.  The database building method of claim 1, wherein the addresses are universal resource locators (URLs).

4.  The database building method of claim 1, wherein the arbitrary site is selected between a retrieval site or a portal site.

5.  The database building method of claim 4, wherein the step (b) further comprises the sub-steps of:

    (b-1) inputting a search word;
    (b-2) parsing texts corresponding to the file names of multimedia contents of texts corresponding to sub categories in hyper text markup language (HTML) web page data having the retrieved results for the input search word; and
(b-3) calling multimedia contents data having addresses corresponding to the parsed texts.

6. The database building method of claim 5, before the step (b-3) further comprising:

(p-b-3-1) visiting the corresponding category when the texts corresponding to the sub category are parsed in the loaded HTML web page data.

7. The database building method of claim 5, wherein in the step (b-2), keywords representing the characteristics of the texts together with the texts corresponding to the sub categories and the texts corresponding to the file names of the multimedia contents are parsed in the loaded HTML web page data.

8. The database building method of claim 5, wherein the multimedia contents data is image data.

9. The database building method of claim 8, after the step (b-3) further comprising the step of:

(b-4) filtering noise images out among the called images.

10. The database building method of claim 9, wherein the step (b-4) further comprises the sub-steps of:

(b-4-1) determining whether or not the pixel number of a called image is equal to or greater than a predetermined threshold value; and
(b-4-2) when the pixel number of a called image is equal to or greater than the predetermined threshold value, indexing the corresponding image.

11. The database building method of claim 20, wherein the threshold value is 128.

12. The database building method of claim 3, wherein in the step (c), the URL of the web page storing the called multimedia contents data is stored in a predetermined database using the URL information.

13. The database building method of claim 7, wherein in the step (c),
at least one of URL information or keyword information together with information on respective images is stored in respective predetermined databases so that keywords can be linked to individual images.

14. A database building method for multimedia contents, the method comprising the steps of:

(a) accessing an arbitrary site providing multimedia contents using a database having a categorized structure;
(b) calling multimedia contents data by spidering the site; and
(c) storing the called multimedia contents data to a predetermined database, using the categorized structure.

15. The database building method of claim 14, wherein the multimedia contents data is image data.

16. The database building method of claim 14, where the step (b) further comprises the sub-steps of:

(b-1) loading root HTML web page data from the visiting site;
(b-2) parsing texts corresponding to a sub category or corresponding to the file names of multimedia contents in the loaded HTML web page data; and
(b-3) calling multimedia contents data of the addresses corresponding to the parsed texts.

17. The database building method of claim 16, before the step (b-3) further comprising the step of:

(p-b-3-1) when texts corresponding to the sub category are parsed in the loaded HTML web page data, visiting the corresponding sub category.

18. The database building method of claim 16, wherein in the step (b-2), keywords representing the characteristics of the texts together with the texts corresponding to the sub category or corresponding to the file names of multimedia contents are parsed.

**19.** The database building method of claim 14, wherein the multimedia contents data is image data.

**20.** The database building method of claim 19, after the step (b-3) further comprising the step of:

(b-4) filtering noise images out among the called images.

**21.** The database building method of claim 20, wherein the step (b-4) further comprises the sub-steps of:

(b-4-1) determining whether or not the pixel number of the called images is equal to or greater than a predetermined threshold value; and
(b-4-2) when the pixel number of the called images is equal to or greater than the predetermined threshold value, indexing the corresponding images.

**22.** The database building method of claim 21, wherein the predetermined threshold value is 128.

**23.** The database building method of claim 14, wherein the step (c) further comprises the sub-steps of:

(c-1) decreasing the resolution of the called image; and
(c-2) storing the image, of which resolution was decreased, in a predetermined database, using the categorized structure.

**24.** The database building method of claim 14, wherein in the step (c), the URL of the web page storing the called multimedia contents is stored in the predetermined database, using the categorized structure.

**25.** The database building method of claim 14, wherein in the step (c), at least one of category information or keyword information, together with information on individual images, is stored in respective predetermined databases.

**26.** A database building apparatus for multimedia contents, comprising:

a web visitor for accessing an arbitrary site providing multimedia contents and calling multimedia contents by spidering the site; and
a database for classifying and storing the called multimedia contents data, using the categorized structure of the database of the site or the addresses storing the called multimedia contents data.

**27.** The database building apparatus of claim 26, wherein the web visitor selects and visits an arbitrary site; loads root HTML web page data from the visiting retrieval site; visits the corresponding sub category after texts corresponding to the sub category are parsed in the loaded HTML web page data; and hierarchically visits other web pages or sites linked to the HTML web page data and having the addresses corresponding to the parsed texts.

**28.** The database building apparatus of claim 26, wherein the multimedia contents is image data.

**29.** The database building apparatus of claim 26, further comprising:

a filtering unit for filtering noise images out among the called images.

**30.** The database building apparatus of claim 29, wherein the filtering unit determines whether or not the pixel number of the called image is equal to or greater than a predetermined threshold value, and when the pixel number of the called image is less than the predetermined threshold value, filters out the corresponding image.

**31.** The database building apparatus of claim 29, wherein the parser parses keywords representing the characteristics of the texts together with the file name of the multimedia contents.

**32.** The database building apparatus of claim 26, further comprising:

a resolution decreasing unit for decreasing the resolution of the image.

**33.** The database building apparatus of claim 26, further comprising:

a control unit for outputting a control signal, wherein it is determined whether or not the number of indexed multimedia contents is equal to or greater than a predetermined number, and when the number of indexed multimedia contents is equal to or greater than the predetermined number, the control signal has a first predetermined logic level and when the number of indexed multimedia contents is less than the predetermined number, the control signal has a second predetermined logic level.

**34.** The database building apparatus of claim 33, wherein responding to the control signal having the first predetermined logic level, the parser finishes parsing, and responding to the control signal having the second predetermined logic level, the parser parses texts corresponding to the addresses of other web pages or sites linked in the HTML web page data.

**35.** The database building apparatus of claim 26, wherein the database includes at one among:

a first database for storing category information;
a second database for storing URL information;
a third database for storing lists of keywords; and
a fourth database for storing multimedia contents indexed by information stored in the first database, second database, and third database.

**36.** The database building apparatus of claim 35, wherein the fourth database stores information on URLs storing indexed multimedia contents, using information stored in the first database, second database, and third database.

**37.** The database building apparatus of claim 35, wherein multimedia contents stored in the fourth database are thumbnails which are generated by decreasing the resolution of the original images.

**38.** A retrieval method for multimedia contents, the method comprising the steps of:

(a) receiving keywords corresponding to query images, which are wanted to be searched, from a user; and
(b) retrieving images corresponding to keywords in a predetermined database storing keywords corresponding to individual images together with a plurality of images.

**39.** The retrieval method of claim 38, wherein the predetermined database stores the plurality of images by category, and the step (b) further comprises the sub-steps of:

(b-1) retrieving a category representing the query image; and
(b-2) retrieving images, of which at least one among color characteristics, texture characteristics, and shapes, are similar, among the images which are determined to be visually similar to the query images among the images in the retrieved category.

**40.** The retrieval method of claim 38, wherein the step (b) further comprises the sub-steps of:

(b-1) retrieving words identical to the input keywords in the entire keyword database; and
(b-2) retrieving images corresponding to the input keywords, by calling the images linked to the retrieved words from the image database, when the words identical to the input keywords are retrieved.

**41.** The retrieval method of claim 40, wherein after the sub-step (b-2) the step (b) further comprises the sub-steps of:

(b-3) displaying a predetermined number of selected images to the user, after selecting the predetermined number of images in the retrieved images;
(b-4) receiving information on query images which are determined to be visually similar to wanted images, from the user; and
(b-5) retrieving images, of which at least one among color characteristics, texture characteristics, and shapes, are similar, among the images which are determined to be visually similar to the query images, in the image database.

**42.** The retrieval method of claim 38, wherein the scope of retrieval is limited within the category of the query images and neighboring categories.

**43.** The retrieval method of claim 38, wherein the scope of retrieval is limited within the URL of the query images and neighboring URLs.

**44.** A retrieval apparatus for multimedia contents comprising:

a database storing a plurality of images and keywords corresponding the individual images; and
a retrieval unit for receiving keywords corresponding to the query data, from the user, and retrieving multimedia contents data corresponding to the keywords in the database.

**45.** The retrieval apparatus of claim 44, wherein the retrieval unit comprises:

a keyword retrieval unit for retrieving words identical to the input keyword in the entire database, and retrieving multimedia contents corresponding to the input keywords, by calling multimedia contents linked to the retrieved words after words identical to the input keywords are retrieved.

**46.** The retrieval apparatus of claim 44, wherein the multimedia contents are images, and the retrieval unit further comprises:

an image retrieval unit for receiving information on query images, which are determined to be visually similar to wanted images, from the user,
and retrieving images, of which at least one among color characteristics, texture characteristics, and shapes, are similar, among the images which are determined to be visually similar to the query images, in the image database.

**47.** The retrieval apparatus of claim 44, wherein the multimedia contents are images and the retrieval apparatus further comprises:

a user interface for selecting a plurality of images, which the user wants to retrieve, in response to the user's input, and providing selection information;
a display image selecting unit for selecting a predetermined number of images among the selected images; and
an image display unit for displaying the predetermined number of selected images to the user.

**48.** The retrieval apparatus of claim 44, wherein the database comprises at least one of:

an image database for storing individual images; and
a keyword database for storing keywords corresponding to individual images together with information on individual images stored in the image database.

**49.** The retrieval apparatus of claim 44, wherein the database comprises at least one of:

an image database for storing individual images; and
a category database for storing category information of data of the visiting web page together with information on individual images stored in the image database.

**FIG. 1**

# FIG. 2

START

SELECT AND VISIT ARBITRARY RETRIEVAL SITE —202

CLICK ON TEXT OF CATEGORY CORRESPONDING TO THE FIELD OF DATABASE TO BE BUILT —204

CODE DATA OF HTML WEB PAGE MAPPED TO THE TEXT —206

208— PARSE TEXTS CORRESPONDING TO SUB CATEGORY OR CORRESPONDING TO FILE NAMES OF IMAGES IN THE LOADED HTML WEB PAGE DATA

SUB PARSED TEXT IS IN THE CATEGORY? 210

YES

212 VISIT CORRESPONDING CATEGORY

NO 214 CALL IMAGES CORRESPONDING TO THE PARSED TEXT

PIXEL NUMBER OF CALLED IMAGES, EQUAL TO OR GREATER THAN 128? 216

NO

218 FILTER OUT CALLED IMAGES

YES 220 DECREASE RESOLUTION OF THE CALLED IMAGES

· STORES IMAGES, WHOSE RESOLUTION IS DECREASED, IN IMAGE DATABASE
· STORE CATEGORY INFORMATION TOGETHER WITH IMAGE INFORMATION IN CATEGORY DATABASE

222

NUMBER OF INDEXED IMAGES, EQUAL TO OR GREATER THAN 1000? 224

NO

YES

END

# FIG. 3

**START**

302 — SELECT AND VISIT ARBITRARY RETRIEVAL SITE

304 — INPUT RETRIEVAL WORD

306 — RECEIVE HTML WEB PAGE DATA HAVING URL INFORMATION OF SITES RELATED TO INPUT WORD

308 — PARSE ADDRESSES OF SITES IN RECEIVED HTML WEB PAGE DATA

310 — HIERARCHICALLY VISIT SITES CORRESPONDING TO PARSED ADDRESSES

312 — LOAD ROOT HTML WEB PAGE DATA

314 — PARSE TEXTS CORRESPONDING TO FILE NAMES OF IMAGES

316 — CALL IMAGES CORRESPONDING TO PARSED TEXTS

318 — PIXEL NUMBER OF CALLED IMAGES, EQUAL TO OR GREATER THAN 128?

NO → 320 — FILTER OUT CALLED IMAGES

YES → 322 — DECREASE RESOLUTION OF THE CALLED IMAGES

324 — · STORES IMAGES, WHOSE RESOLUTION IS DECREASED, IN IMAGE DATABASE
· STORE URL INFORMATION TOGETHER WITH IMAGE INFORMATION IN URL DATABASE

326 — NUMBER OF INDEXED IMAGES, EQUAL TO OR GREATER THAN 1000? — NO

YES

**END**

# FIG. 4

# FIG. 5

```
                    ┌─────────┐
                    │  START  │
                    └─────────┘
                         │
                         ▼
    ┌─────────────────────────────────────┐
    │ RECEIVE KEYWORDS CORRESPONDING      │──── 502
    │         TO QUERY IMAGES             │
    └─────────────────────────────────────┘
                         │
                         ▼
    ┌─────────────────────────────────────┐
    │  RETRIEVE IMAGES CORRESPONDING      │──── 504
    │         TO KEYWORDS                 │
    └─────────────────────────────────────┘
                         │
                         ▼
    ┌─────────────────────────────────────┐
    │ SELECT PREDETERMINED NUMBER OF      │
    │ IMAGES AMONG RETRIEVED IMAGES, AND  │──── 506
    │ DISPLAY SELECTED IMAGES TO USER     │
    └─────────────────────────────────────┘
                         │
                         ▼
    ┌─────────────────────────────────────┐
    │ RECEIVE INFORMATION ON QUERY        │
    │ IMAGES DETERMINED TO BE VISUALLY    │──── 508
    │ SIMILAR TO WANTED IMAGES, FROM USER │
    └─────────────────────────────────────┘
                         │
                         ▼
    ┌─────────────────────────────────────┐
    │ RETRIEVE IMAGES OF WHICH AT LEAST   │
    │    ONE OF COLOR CHARACTERISTICS,    │
    │ TEXTURE CHARACTERISTICS, AND SHAPES │──── 510
    │ ARE SIMILAR, AMONG CANDIDATE QUERY  │
    │ IMAGES WHICH ARE DETERMINED TO BE   │
    │ VISUALLY SIMILAR TO QUERY IMAGES    │
    └─────────────────────────────────────┘
                         │
                         ▼
    ┌─────────────────────────────────────┐
    │ DISPLAY PREDETERMINED NUMBER        │──── 512
    │ OF IMAGES AMONG RETRIEVED IMAGES    │
    └─────────────────────────────────────┘
                         │
                         ▼
              ◇ WANTED IMAGES,  ◇   NO
              ◇  RETRIEVED?     ◇──────┐
                    514                │
                      │ YES
                      ▼
                 ┌─────────┐
                 │   END   │
                 └─────────┘
```